# EUROPEAN PATENT APPLICATION

(11) **EP 0 634 590 A1**
(43) Date of publication of application: **18.01.1995**
(21) Application number: 94201819.3
(22) Date of filing: 24.06.1994
(51) Int. Cl.: F16H 61/00

(54) **Method for regulating a transmission unit in motor vehicles, and a transmission unit using this method**

(30) Priority: 14.07.1993 BE 9300728
(71) Applicant: VCST, naamloze vennootschap, B-3800 Sint-Truiden (BE)
(72) Inventor: Gieles, Wilhelmus Theodorus Maria, NL-6216 BN Maastricht (NL)
(74) Representative: Donné, Eddy

(57) **Abstract**

Method for regulating a transmission unit for motor vehicles, more particularly for regulating a transmission unit of the type that uses a continuously variable transmission (2) and that comprises at least a primary pulley (3) on an input shaft (4), a secondary pulley (5) on an output shaft (6), an endless transmission element (7) between said two pulleys (3, 5), a first pressure cylinder (8) which operates with the primary pulley (3), and a second pressure cylinder (9) which operates with the secondary pulley (5), whereby the pulleys (3, 5) and the pressure cylinders (8, 9) enable the running radiuses (R1, R2) of the endless transmission element (7) on the pulleys (3, 5) to be altered, and thus also the transmission ratio, characterised in that both the primary and the secondary pressure, or in other words both the pressure in said first pressure cylinder (8) and the pressure in said second cylinder (9), can be regulated by means of a control system, whereby a control mechanism is created which provides for a controlled basic pinching force and a controlled selection force, which can be superimposed both on the primary and on the secondary side of the transmission respectively.

## Description

This invention concerns a method for regulating the transmission unit on motor vehicles, and a transmission method using this method.

More particularly, it concerns transmission units of the type using a continuously variable transmission comprising at least a primary pulley on an input shaft, a secondary pulley on an output shaft, an endless transmission element between the two pulleys, a first pressure cylinder that operates on the primary pulley, and a secondary pressure cylinder that operates on the second pulley, whereby said pulleys and pressure cylinders enable the running radius of the endless transmission element on the pulleys to be altered, and with it the transmission radius.

It is known that on the transmission units of the above-mentioned type existing until now, the pressure in only one of the above-mentioned two pressure cylinders - more particularly the pressure cylinder belonging to the secondary pulley - is usually kept at a certain value, such that a certain pinching force is exercised, while the primary pulley is regulated exclusively by means of a volume flow, such regulation being known as flow regulation, for the purpose of setting the transmission ratio. A disadvantage of these known transmission units is that under certain dynamic conditions they have limitations; in other words, they do not meet the requirements placed on them.

The known transmission units of the above-mentioned type have among other things the characteristic that the primary pressure, in other words the pressure prevailing in the above-mentioned first cylinder, can vary greatly, even falling below the slip threshold. This pressure, for example, is equal to zero when stationary. Until now, it has been assumed that the pinching force on the second pulley leads to an equilibrium force on the primary pulley. However, this appears to be possible only to a limited extent, which under extreme conditions accordingly results in slip at the transmission element. For instance, in case of very hard braking the transmission must return to its original position before it is possible to pull away again, otherwise slip occurs. This can be achieved by using higher revolution speeds for regulation, for example 1,700 rpm, which however is undesirable from the point of view of optimum fuel consumption.

An improvement is known from document JP 1116365, according to which a pressure is added to or subtracted from a reference pressure. A great disadvantage hereby consists in that the total pinching force cannot only become greater but also smaller than the basic pinching force, with the risk that the endless transmission element starts to slip.

This invention has as its aim a method for regulating a transmission unit in motor vehicles, and a transmission unit, in which the above advantages are avoided.

For this purpose, the invention concerns a method for regulating the transmission speed of motor vehicles, more particularly a transmission unit of the above-mentioned type, characterised in that both the primary and the secondary pressure, in other words the pressure in the above-mentioned first as well as the second cylinder, is regulated by a control mechanism, whereby a control mechanism is created which provides for a controlled, basic pinching force and a controlled selection force, which can be superimposed either on the primary or the secondary side of the transmission respectively.

According to a further particular embodiment, the method has the characteristic that for the basic pinching force a value is taken which is slightly higher than the value at which slip occurs between the endless transmission element and the pulleys. The basic pinching forces applied to the pressure cylinders are hereby derived from the engine torque and the transmission ratio of the transmission.

In order for the transmission to work in an optimum manner, the above-mentioned selection forces on the primary and secondary side respectively are preferably determined from at least the difference between the required and measured speed of revolution, whereby the required speed can essentially be taken from the position of the accelerator pedal. In particular, preference is given to a control mechanism in which, in the case where the required selection force is less than zero, there is a basic pinching force increased with the absolute value of the selection force on the primary side, while on the secondary side there is only a basic pinching force, and in the case where the required selection force is greater than zero, there is only a selection force on the primary side, while on the secondary side there is both a basic pinching force and a selection force.

The invention also concerns a transmission unit for applying the above-mentioned method, more particularly a transmission unit of the above-mentioned type, with the characteristic that it has a control mechanism that ensures that the pressure both in the first pressure cylinder and in the second pressure cylinder is controlled, and that it provides a controlled, basic pinching force and a controlled selection force which can be superimposed either on the primary side or on the secondary side of the transmission respectively.

In order to better explain the characteristics of the invention, a transmission unit according to the invention is described below, without being limitative in any way, with reference to the accompanying drawings, where:
figure 1 is a schematic drawing of the transmission unit according to the invention;
figure 2 is a more detailed drawing of the part indicated in figure 1 by F2.

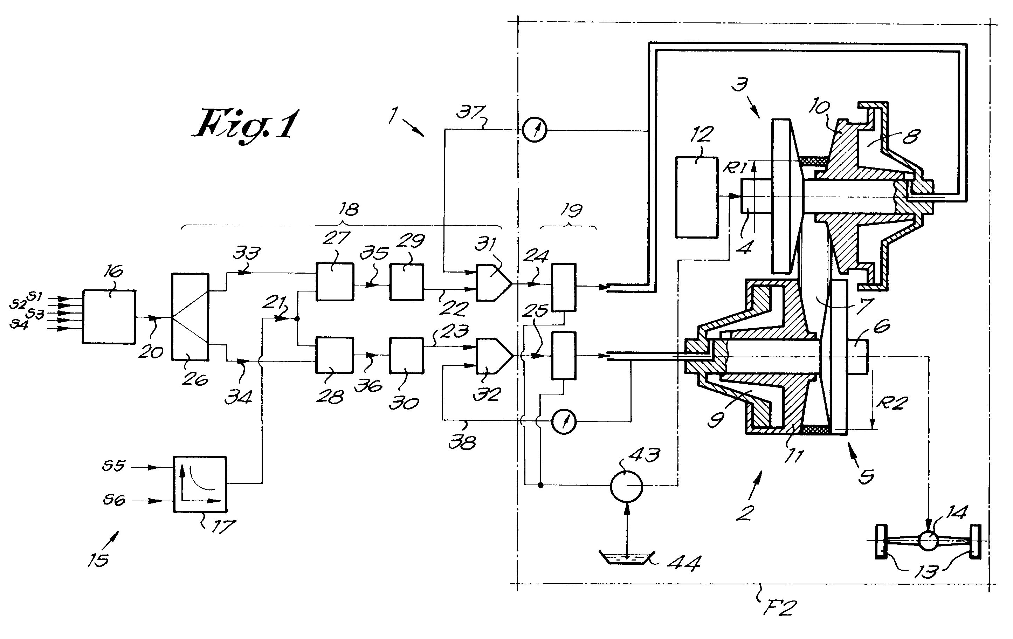

As shown in figure 1, the invention concerns a transmission unit 1 of the type that uses a continuously variable transmission 2 and that comprises at least a primary pulley 3 on an input shaft 4; a secondary pulley 5 on an output shaft 6; an endless transmission element 7 between the two pulleys 3 and 5, such as a belt; a first pressure cylinder 8 that operates with the primary pulley 3; and a second pressure cylinder 9 that operates with the secondary pulley 5, whereby the pulleys 3 and 5 and the pressure cylinders 8 and 9 make it possible to alter the running radiuses R1 and R2 of the endless transmission element 7 on the pulleys 3 and 5, and thus to alter the transmission ratio.

As is known, each of the two pulleys 3 and 5 is V-shaped, and each has a half disk, 10 and 11 respectively, which can be displaced by means of said pressure cylinders 8 and 9.

As also shown in figure 1, the input shaft 4 is driven directly or indirectly by the engine 12 of the vehicle. The output shaft 6 provides the drive to the wheels 13 via a number of transmissions (not shown) and a differential 14.

The special feature of the present invention is that it comprises a control system 15 which ensures that both the pressure in the first pressure cylinder 8 and the pressure in the second pressure cylinder 9 is controlled, and which ensures a controlled basic pinching force and a controlled selection force both on the primary and on the secondary side of the transmission 2.

Said control system 15 preferably consists of at least a regulator 16, an arithmetic unit 17 for determining the minimum pinching force, signal processing devices 18 and a hydraulic pressure regulation circuit 19.

The regulator 16 supplies a signal 20 which is a function of various parameters which essentially depend on the control of the vehicle.

One important datum in this respect is the difference between the required and the measured speed of revolution. The input parameters also include at least a signal S1 representing the required speed of revolution and a signal S2 representing the measured speed of revolution. The signal S1 can be derived from the accelerator pedal.

Other parameters which are of importance include among others the transmission ratio of the transmission and the torque to be transmitted, represented by signals S3 and S4.

The regulator 16 essentially takes both dynamic and static characteristics into account. The signal 20 is accordingly the result of a static and a dynamic selection force.

The arithmetic unit 17 supplies a signal 21 derived from the engine torque and the transmission ratio of the transmission 2, based on the signals S5 and S6 representing these quantities. The signal S5 can be obtained by estimating the torque or by measuring the coupling pressure. The signal S6 can be determined by the measurement of the speed of revolution and the division of these values. The torque together with the transmission ratio determines the minimum pinching force necessary to avoid slip.

The signal processing device 18 determines two control values 22 and 23 and supplies corresponding control signals 24 and 25. The first control value 22 hereby is a function of the signal 21 from the arithmetic unit 17, in order to provide a basic pinching force so as to prevent slip, and is also a function of said signal 20 in the case were the required selection force is less than zero, in order to provide a corresponding supplementary selection force to the primary pulley 3. The second control value 23 is also a function of the signal 21 from the arithmetic unit 17, also in order to provide a basic pinching force, and is also a function of said signal 20 in the case where the required selection force is greater than zero, in order to provide a corresponding supplementary selection force to the secondary pulley 5.

The signal processing device 18 is made up of a selection unit 26, summing devices 27 and 28, converters 29 and 30 and regulators 31 and 32. The selection unit 26 ensures that the signal 20 is supplied to the primary side in the case where the required selection force is less than zero as an absolute value, and to the secondary side in the case where the required selection force is greater than zero, resulting in signals 33 and 34 respectively. The summing device 27 sums the signals 21 and 33, and the summing device 28 sums the signals 21 and 34. Said summing devices supply signals 35 and 36 which are representative of the forces to be exerted on the primary and secondary pulleys 3 and 5.

In the converters 29 and 30, the signals 35 and 36 representing forces are converted, taking account of the area of the pressure cylinders 8 and 9, into signals representing the pressures to be supplied, namely the above-mentioned control values 22 and 23.

Taking into account the pressures already obtaining on the primary and secondary side, by means of feedback loops 37 and 38, the regulators 31 and 32 ensure that suitable control signals 24 and 25 are supplied.

The above-mentioned pressure regulation circuit 19 converts said first control signal 24 into a pressure on said first pressure cylinder 8, and converts said second control signal 25 into a pressure on said second pressure cylinder 9.

The regulator 16, the arithmetic unit 17 and the signal processing device 18 preferably consist of electronic circuits. On the basis of the construction described above, such circuits can be made by any person acquainted with the art.

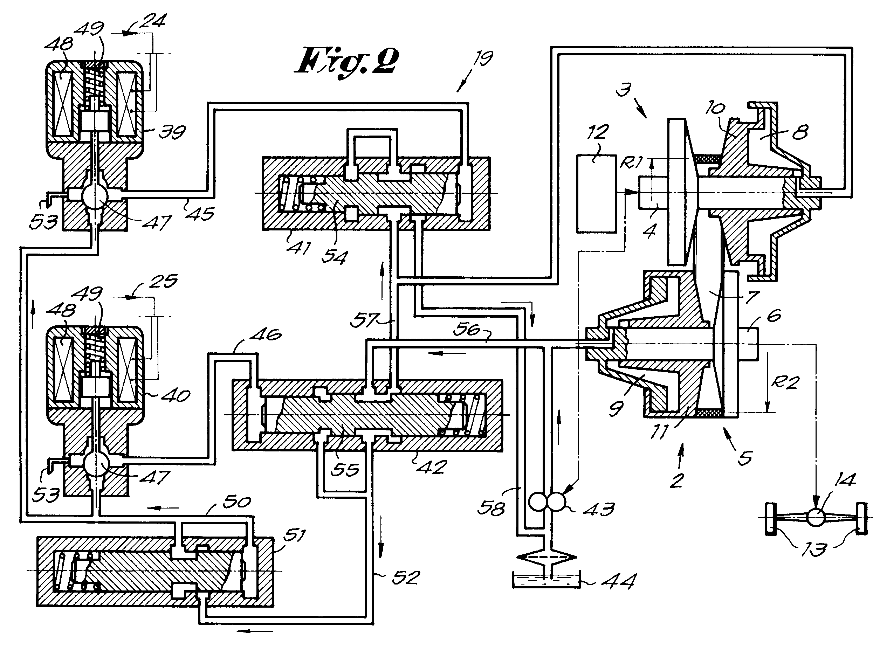

The pressure regulation circuit 19 is shown in greater detail in figure 2. As shown in this drawing, the circuit is preferably of the electro-hydraulic type and makes use of electromagnetic, pulse-controlled valves 39 and 40, which in turn each control a primary and a secondary pressure regulation valve, 41 and 42 respectively. The regulating device 19 is supplied with a hydraulic medium from a reservoir 44 by means of a pump 43.

The pulse-controlled valves 39 and 40 are controlled by means of the electrical control signals 24 and 25, and ensure that in the lines 45 and 46 connected to the pressure regulation valves 41 and 42, the necessary control pressures obtain in order to create the pressures in lines 56 and 57 corresponding to the control values 22 and 23. In order to achieve this, each valve, respectively 39 and 40, has a spring-loaded valve shutter 47 which can be opened against the force of a spring 49 by means of an electromagnet 48, so that the medium, which is supplied via a line 50, can flow in the line 45 or 46. The pressure in the line 50 is kept constant by means of a pressure regulation valve 51 supplied by means of a pump 43 via a line 52.

By using electrical control signals 26 and 27 whose pulse length varies as a function of the required pressure values, the valve shutters 30 allow more or less hydraulic medium through. Since the medium can only flow slowly in the lines 45 and 46 and can only flow away slowly through small exit holes 53, the pressure in the lines 45 and 46 can be altered by this means.

The pressure regulation valves 41 and 42 are preferably valves with spring-loaded valve shutters, respectively 54 and 55, whose position and thus the amount of passage can be determined by the pressure in the lines 45 and 46. In the embodiment shown, the pressure regulation valves 41 and 42 are connected in series, with the pumped medium being supplied via a line 56 to the pressure regulation valve 42. Depending on the position of the valve shutter 55, part of this medium is led off to a greater or lesser extent via a line 57 and supplied to the pressure regulation valve 41, from where, depending on the position of the valve shutter 54, it is led to the suction side of the pump 43 via a line 58. The lines 56 and 57 are connected to the pressure cylinders 9 and 8.

In order to ensure that both the force exerted by the first pressure cylinder 8 and the force exerted by the second pressure cylinder 9 can be set optimally, the first pressure cylinder 8 has a greater surface area than the second pressure cylinder 9. In this way, a smaller pressure than in the line 56 can be obtained in the line 57 at any moment, which is necessary to achieve the above-mentioned selection of the pressure regulation valves 41 and 42, and to ensure that if necessary a greater force can nevertheless be achieved at the first pressure cylinder 8 than at the second pressure cylinder 9, independently of the fact that the pressure in the line 57 is always lower than in the line 56.

It should be noted that the control is designed so that when the pulse-controlled valves 39 and 40 are not actuated, the valve 39 adjusts itself so that a maximum primary pressure is obtained, and the valve 40 adjusts itself so that a maximum secondary pressure is obtained.

It should also be noted that the determination, from the torque, of the torque transmitted, and the determination of the pinching forces on the basis of this, is done in such a way that the endless transmission element 7 can always transmit more torque than the coupling.

The operation of the transmission unit 1 can easily be derived from the drawings and the above description, and consists essentially in that depending on the signals 20 and 21, controlled pressures are supplied both to the primary and to the secondary sides, such that the transmission unit cannot slip, even under dynamic conditions. A constantly-controlled pinching force is provided in each of the two pressure cylinders 8 and 9. In addition, a controlled selection force is provided, which can be applied either to the pressure cylinder 8 or 9, depending on whether said selection force is greater or less than zero.

The present invention is not limited to the embodiment described by way of example and shown in the drawings; on the contrary, such a method for regulating a transmission unit, and the transmission unit used for this purpose, can be made in different variants while remaining within the scope of the invention as defined in the accompanying claims.

## Claims

1. Method for regulating a transmission unit for motor vehicles, more particularly for regulating a transmission unit of the type that uses a continuously variable transmission (2) and that comprises at least a primary pulley (3) on an input shaft (4), a secondary pulley (5) on an output shaft (6), an endless transmission element (7) between said two pulleys (3, 5), a first pressure cylinder (8) which operates with the primary pulley (3), and a second pressure cylinder (9) which operates with the secondary pulley (5), whereby the pulleys (3, 5) and the pressure cylinders (8, 9) enable the running radiuses (R1, R2) of the endless transmission element (7) on the pulleys (3, 5) to be altered, and thus also the transmission ratio, characterised in that both the primary and the secondary pressure, or in other words both the pressure in said first pressure cylinder (8) and the pressure in said second cylinder (9), can be regulated by means of a control system, whereby a control mechanism is created which provides for a controlled basic pinching force and a controlled selection force, which can be superimposed both on the primary and on the secondary side of the transmission respectively.

2. Method according to claim 1, characterised in that a value is selected for the basic pinching force which is slightly higher than the value at which slip occurs between the endless transmission element (7) and the pulleys (3, 5).

3. Method according to claim 1 or 2, characterised in that the basic pinching forces applied to the pressure cylinders (8, 9) are derived from the engine torque and the transmission ratio of the transmission (2).

4. Method according to any of the previous claims, characterised in that in determining the above-mentioned selection forces on the primary and secondary side respectively, at least the difference between the required and the measured speed of revolution is taken into account.

5. Method according to claim 4, characterised in that in the case where the required selection force is less than zero, both a basic pinching force and a selection force are provided on the primary side, while on the secondary side only a basic pinching force is provided, and that in the case where the required selection force is greater than zero, only a basic pinching force is provided on the primary side, while both a basic pinching force and a selection force are provided on the secondary side.

6. Method according to any of the above claims, characterised in that determining the transmitted torque from the coupling pressure, and determining the pinching forces on the basis of this, is done such that the endless transmission element (7) can always transmit more torque than the coupling.

7. Transmission unit using the method of claim 1 and being of the type mentioned in claim 1, characterised in that it comprises a control system (15) which ensures that the pressure in both the first pressure cylinder (8) and in the second pressure cylinder (9) is controlled, and which provides a controlled basic pinching force and a controlled selection force both to the primary and to the secondary side of the transmission (2).

8. Transmission unit according to claim 7, characterised in that the control system (15) comprises at least a regulator (16) which supplies a signal (20) representing the required selection force, whereby said signal takes into account at least the difference between the required and the measured speed of revolution; an arithmetic unit (17) which supplies a signal (21) that determines the basic pinching force and is derived from the engine torque and the transmission ratio of the transmission (2); signal processing means (18) which determine two control values (22, 23) and supply corresponding control signals (24, 25), whereby the first control value (22) is a function of the signal (21) from the arithmetic unit (17), so as to provide a basic pinching force in order to prevent slip, and, in the case where the required selection force is less than zero, which is also a function of said signal (20), so as to provide a corresponding additional selection force to the primary pulley (3), and whereby the second control value (23) is also a function of the signal (21) from the arithmetic unit (17), also so as to provide a basic pinching force, and, in the case where the required selection force is greater than zero, is also a function of the signal (20) from said regulator (16), so as to provide a corresponding additional selection force to the secondary pulley (5); and a hydraulic pressure regulation circuit (19) which converts said first control signal (24) into a pressure on the first pressure cylinder (8) and which converts said second control signal (25) into a pressure on the second pressure cylinder (9).

9. Transmission unit according to claim 8, characterised in that the pressure regulation circuit (19) is of the electro-hydraulic type and essentially comprises, on the one hand, pulse-controlled electromagnetic valves (39, 40), which provide the control pressures, and, on the other hand, a primary pressure regulation valve (41) and a secondary pressure regulation valve (42) which are controlled by said control pressures and which regulate the pressures in the first pressure cylinder (8) and the second pressure cylinder (9).

10. Transmission unit according to claim 9, characterised in that the pressure regulation valves (41, 42) are connected in series, whereby the hydraulic medium is supplied first to the pressure regulation valve (42) belonging to the secondary side of the transmission (2), and in that the first pressure cylinder (8) has a greater pressure area than the second pressure cylinder (9).
